# EUROPEAN PATENT APPLICATION

(11) **EP 4 283 183 A1**
(43) Date of publication of application: **29.11.2023**
(21) Application number: 23170241.6
(22) Date of filing: 27.04.2023
(51) Int. Cl.: F17C 7/04

(54) **GAS DELIVERY SYSTEM**

(30) Priority: 26.05.2022 GB 202207725
(71) Applicant: Rolls-Royce plc, London N1 9FX (GB); Rolls-Royce Solutions Italia SRL, 19021 Liguria (IT)
(72) Inventor: Bozzolo, Michele, Derby, DE24 8BJ (GB); Butler, Philip D, Derby, DE24 8BJ (GB)
(74) Representative: Rolls-Royce plc

(57) **Abstract**

A gas delivery system (10) intended for use in delivering hydrogen gas from a cryogenic liquid hydrogen storage tank (20) is provided. The gas delivery system has: a cryogenic liquid storage tank; an evaporator (30); a pressurisable gas reservoir (40); a valve sub-system including: a multi-outlet valve arrangement (60) having a first valve inlet (61), a first valve outlet (62) and a second valve outlet (63); and a multi-inlet valve arrangement (70) having a second valve inlet (71), a third valve inlet (72) and a third valve outlet (73); a delivery line (6) connected to the third valve outlet; an evaporator feed line (1) connecting the storage tank and the evaporator inlet; an evaporator dispensing line (2) connecting the evaporator and the first valve inlet; a reservoir feed line (3) connecting the first valve outlet and the reservoir; a reservoir dispensing line (4) connecting the reservoir and the second valve inlet; and a reservoir bypass line (5) connecting the second valve outlet and the third valve inlet. The multi-outlet valve arrangement has: a first state in which the first valve outlet is open, and the second valve outlet is closed; a second state in which the first valve outlet and the second valve outlet are closed; and a third state in which the first valve outlet is closed, and the second valve outlet is open. The multi-inlet valve arrangement has: a fourth state in which the second valve inlet is open, and the third valve inlet is closed; and a fifth state in which the second valve inlet is closed, and the third valve inlet is open. The gas delivery system further comprises a computer-based controller configured to control the valve sub-system to provide: a first operating condition of the gas delivery system in which the multi-outlet valve arrangement is in the first state and the multi-inlet valve arrangement is in the fourth state, the gas reservoir delivers gas to the delivery line via the reservoir dispensing line, and the gas reservoir is concurrently pressurised by gas fed from the evaporator via the reservoir feed line, the reservoir bypass line being closed; a second operating condition of the gas delivery system in which the multi-outlet valve arrangement is in the second state and the multi-inlet valve arrangement is in the fourth state, the gas reservoir delivers gas to the delivery line via the reservoir dispensing line, the reservoir feed line and the reservoir bypass line being closed; and a third operating condition of the gas delivery system in which the multi-outlet valve arrangement is in the third state and the multi-inlet valve arrangement in the fifth state, the evaporator delivers gas to the delivery line via the reservoir bypass line, the reservoir feed line and the reservoir dispensing line being closed.

## Description

### Field of the Invention

The present invention relates to systems for delivering gas from a cryogenic liquid storage tank and particularly, although not exclusively, to delivering hydrogen gas from a cryogenic liquid hydrogen storage tank.

### Background

Fuels that are in their gaseous phase at ambient temperatures and atmospheric pressure (approximately 1 bara) are often stored in their liquid phase by cooling them to sub-ambient temperatures. For example, liquid hydrogen is typically stored in a cryogenic liquid storage tank. Such fuels are typically stored as liquids because of the large increase in density, and thus decrease in storage volume per unit mass, that accompanies liquification.

Often, the cryogenic liquid storage tanks in which such fuels are stored are also pressurised to compress the fuel to supra-atmospheric pressures, such that they can be stored in their liquid phase at higher temperatures than if they were at atmospheric pressure.

However, the end uses of such fuels often require the fuel to be in its gaseous state and above atmospheric pressure, typically to improve reaction rates in processes for which the fuel is a feedstock. Accordingly, it is necessary to have a gas delivery system that can extract fuel from a cryogenic liquid storage tank and either deliver the fuel in its gaseous phase to an end use, or deliver the fuel in its liquid phase to subsequently be vaporised at the end use.

The end uses of such fuels typically also demand continuous supply of the fuel whilst the end use is running, as opposed to intermittent delivery, which poses further challenges when the fuel is stored as a liquid. A number of arrangements for continuously delivering a fuel from a cryogenic storage tank to an end use in its gaseous phase and at supra-atmospheric pressure are possible.

One arrangement is for the cryogenic liquid storage tank to be pressurised above atmospheric pressure, and the fuel to be transferred to the end use as a liquid. The pressure of the storage tank is used to drive flow of the fuel and a valve can control the flow rate. However, in such systems it is typically necessary to ensure that the fuel remains in its liquid phase during the transfer from the storage tank to the end use, because if some, or all, of the fuel vaporises during the transfer, then control of the delivery system can become difficult and the delivery system may become unstable. The safety systems for such an arrangement are also complex.

A related option suitable for an instance in which the cryogenic liquid storage tank is at atmospheric pressure is to pump liquid fuel from the cryogenic liquid storage tank to the end use using a cryogenic pump. However, alongside the aforementioned issues of transporting cryogenic liquids, this option also requires a cryogenic pump. Cryogenic pumps are expensive pieces of process equipment and can be prone to reliability issues.

In order to avoid the issues associated with transportation of cryogenic liquids, a third arrangement is for an evaporator to be charged with a cryogenic liquid from a cryogenic liquid storage tank at atmospheric pressure; the liquid used to charge the evaporator is then vaporised at atmospheric pressure and the resulting gas is transferred to a gas compressor to reach the pressure required by the end use. The compressed gas is then forwarded to that end use. However, the requirement for a gas compressor in this arrangement is undesirable. Gas compressors are expensive pieces of process equipment and can be prone to reliability issues. The control systems for such an arrangement are also complex.

In order to obviate the need for a gas compressor, the evaporator in the third arrangement may be fed by a cryogenic pump, which can increase the pressure of the evaporator to the pressure required for the end use. A control valve downstream of the evaporator can then be used to control delivery of the gas to the end use. However, as suggested above, it would be desirable to be able to avoid use of cryogenic pumps. Moreover, control of this arrangement is challenging, because if the end use demand stops, the evaporation occurring at that point in time will result in excess pressure in the line feeding the end use. Additionally, the safety systems for such an arrangement are complex.

It is known for a cascade of flash drums gravity fed from an atmospheric cryogenic liquid storage tank to be used. A feed line between the cascade of flash drums and the storage tank can be provided with a valve such that the cascade of evaporators can be isolated from the storage tank during evaporation of the liquid in the flash drums; thus, the pressure of the resulting gas can be higher than the pressure of the storage tank. The pressurised evaporators can then be used in sequence to provide high pressure gas to an end use, each evaporator in the cascade taking over from the previous evaporator when the previous evaporator's gas pressure drops below a threshold. However, such an arrangement requires a plurality of evaporators in order to be able to deliver gas continuously.

The present invention has been devised in light of the above considerations.

### Summary of the Invention

It is desired to provide a gas delivery system for delivering gas from a cryogenic liquid storage tank that is simple, flexible, low cost and reliable.

Accordingly, in a first aspect there is provided a gas delivery system
a gas delivery system comprising:
a cryogenic liquid storage tank;
an evaporator;
a pressurisable gas reservoir;
a valve sub-system including: a multi-outlet valve arrangement having a first valve inlet, a first valve outlet and a second valve outlet; and a multi-inlet valve arrangement having a second valve inlet, a third valve inlet and a third valve outlet;
a delivery line connected to the third valve outlet;
an evaporator feed line connecting the storage tank and the evaporator;
an evaporator dispensing line connecting the evaporator and the first valve inlet;
a reservoir feed line connecting the first valve outlet and the reservoir;
a reservoir dispensing line connecting the reservoir and the second valve inlet; and
a reservoir bypass line connecting the second valve outlet and the third valve inlet;

wherein the multi-outlet valve arrangement has:
   a first state in which the first valve outlet is open, and the second valve outlet is closed;
   a second state in which the first valve outlet and the second valve outlet are closed; and
   a third state in which the first valve outlet is closed, and the second valve outlet is open;
wherein the multi-inlet valve arrangement has:
   a fourth state in which the second valve inlet is open, and the third valve inlet is closed; and
   a fifth state in which the second valve inlet is closed, and the third valve inlet is open; and
wherein the gas delivery system further comprises a computer-based controller configured to control the valve sub-system to provide:
   a first operating condition of the gas delivery system in which the multi-outlet valve arrangement is in the first state and the multi-inlet valve arrangement is in the fourth state, the gas reservoir delivers gas to the delivery line via the reservoir dispensing line, and the gas reservoir is concurrently pressurised by gas fed from the evaporator via the reservoir feed line, the reservoir bypass line being closed;
a second operating condition of the gas delivery system in which the multi-outlet valve arrangement is in the second state and the multi-inlet valve arrangement is in the fourth state, the gas reservoir delivers gas to the delivery line via the reservoir dispensing line, the reservoir feed line and the reservoir bypass line being closed; and
a third operating condition of the gas delivery system in which the multi-outlet valve arrangement is in the third state and the multi-inlet valve arrangement in the fifth state, the evaporator delivers gas to the delivery line via the reservoir bypass line, the reservoir feed line and the reservoir dispensing line being closed.

This gas delivery system, and in particular the different operating conditions provided by controlling the valve sub-system, allows gas produced from liquid stored in the cryogenic liquid storage tank to be delivered to an end use via the delivery line in a continuous fashion (that is, gas can be delivered to the end use without interruption, even though evaporation of the cryogenic liquid to produce that gas is conducted in a batchwise manner in the evaporator, and the gas delivery system can continue to provide gas to the end use until the storage tank contains no more cryogenic liquid) by alternating between delivering gas from the gas reservoir, during which time the evaporator can be charged with liquid and that liquid evaporated, and delivering gas from the evaporator via the reservoir bypass line. Advantageously, the above-described gas delivery system does not require a cryogenic pump and/or a gas compressor in order to continuously deliver gas above ambient pressure from a cryogenic liquid storage tank at ambient pressure, and does not require the presence of multiple evaporators.

Some optional features of the present disclosure will now be set out. These are applicable singly or in any combination with an aspect of the present disclosure except where such a combination is clearly impermissible or expressly avoided.

The gas delivery system may be used to deliver hydrogen gas stored as liquid hydrogen in the cryogenic liquid storage tank. Using the gas delivery system to deliver hydrogen gas to an end use is advantageous in that the hydrogen can be stored as a liquid, but other than when fed from the storage tank to the evaporator, is not transported in its liquid phase. Reducing the number of vessels between which liquid hydrogen is transported within a system means that the insulation requirements of the gas delivery system are less onerous than a system in which liquid hydrogen is transported between a large number of vessels and/or over large distances.

Typically, the valve sub-system further comprises a control valve disposed on the delivery line. This control valve allows the pressure and/or flow rate of the gas delivered downstream of the control valve to be controlled such that it can meet the pressure and/or flowrate requirements of the end use.

Typically, the valve sub-system further comprises an evaporator feed valve disposed on the evaporator feed line. This evaporator feed valve facilitates control of the flow of liquid from the storage tank into the evaporator and allows the evaporator to be shut off from the storage tank. The evaporator feed valve may be open or closed depending on the operating condition of the gas delivery system. Typically, the evaporator feed valve is closed in the first operating condition and the third operating condition. This allows the evaporator to be shut off from the storage tank when operating the gas delivery system under the first or third operating condition and thus avoid pressurisation of the storage tank. Advantageously, when operating the system under the second operating condition, the evaporator feed valve is openable to charge the evaporator with liquid from the storage tank via the evaporator feed line, and is subsequently closed to evaporate the charged liquid in the evaporator. Having the evaporator feed valve be openable and then subsequently closed under the second operating condition advantageously allows for the charging of the evaporator with liquid without subsequently pressurising the storage tank during evaporation of that liquid.

Optionally, the evaporator has a vent outlet and the valve sub-system further comprises a vent valve to control gas flow through the vent outlet. Advantageously, such a vent valve may be used to vent gas from the evaporator in order to reduce the pressure in the evaporator. De-pressurisation of the evaporator may be a step used in a normal operating sequence of the gas delivery system or may be part of a response to a safety alert. The vent valve may be openable when operating under the second operating condition. For example, the vent valve can be opened prior to charging the evaporator with liquid, such that the evaporator is at the same pressure as the storage tank when liquid is fed down the evaporator feed line to the evaporator. Advantageously, this can allow the pressure of the evaporator to exceed the pressure of the storage tank when the system is switched from the third operating condition to the second operating condition, and equalising the pressure of the storage tank and evaporator prior to feeding liquid into the evaporator makes inducing a flow of liquid from the storage tank to the evaporator simpler.

Typically, in a system comprising an evaporator feed valve disposed on the evaporator feed line and a vent valve controlling gas flow through a vent outlet on the evaporator, the vent valve is only openable when the evaporator feed valve is closed. This is advantageous because it can prevent excessive quantities of gas being vented out of the evaporator.

Preferably, when the system comprises a vent outlet and a vent valve, the vent outlet connects to a condenser sub-system, the condenser sub-system also being connected to the storage tank. Thus, gas vented through the vent outlet can be condensed and recycled to the storage tank as a liquid, reducing gas loses from the system. Alternatively, or additionally, gas vented through the vent outlet can be fed to an end use other than the end use being delivered gas by the delivery line.

In a system comprising the above-described condenser sub-system, the storage tank may comprise a boil-off outlet connected to the condenser sub-system. Advantageously, this facilitates recycling of the boil-off gas from the cryogenic liquid storage tank to the storage tank as a liquid.

The multi-outlet valve arrangement can comprise any of (i) a four-port valve, (ii) a three-port valve and a two-port valve, and (iii) two two-port valves. Each possible manner of providing the multi-outlet valve arrangement has advantages associated with its control, simplicity, failure modes, safety systems and/or serviceability.

The evaporator may use one or more of ambient air, an electric heater and a process fluid as a heat source. Using ambient air as a heat source is advantageous in reducing the complexity of the system and reducing and/or eliminating the energy input required from a heater. Using an electric heater as a heat source is advantageous in improving the controllability of the system. Using a process fluid as a heat source is advantageous in reducing and/or eliminating the energy input required from a heater.

In a second aspect there is provided a fuel cell system comprising a fuel cell and the gas delivery system of the first aspect, with the gas delivery system configured to deliver gas to the fuel cell as fuel. Advantageously, this provides a fuel cell system that stores fuel in its liquid state in the cryogenic liquid storage tank and that has a simple and reliable system for continuously delivering fuel from the storage tank to the fuel cell.

In a third aspect there is provided a gas turbine combustor system comprising a gas turbine combustor and the gas delivery system of the first aspect, with the gas delivery system configured to deliver fuel gas to the gas turbine combustor. Advantageously, this provides a gas turbine combustor system that stores fuel in its liquid state in the cryogenic liquid storage tank and that has a simple and reliable system for continuously delivering fuel from the storage tank to the gas turbine combustor.

In a fourth aspect there is provided a method of operating the gas delivery system of the first aspect comprising implementing in any order:
the first operating condition of the gas delivery system to deliver gas from the gas reservoir to the delivery line via the reservoir dispensing line and concurrently pressurising the gas reservoir with gas from the evaporator via the reservoir feed line;
the second operating condition of the gas delivery system to deliver gas from the gas reservoir to the delivery line via the reservoir dispensing line; and
the third operating condition of the gas delivery system to feed gas to the delivery line from the evaporator via the reservoir bypass line.

This method allows the gas delivery system to be operated in a continuous fashion by alternating between delivering gas from the gas reservoir, during which time the evaporator can be charged with liquid and that liquid evaporated, and delivering gas from the evaporator via the reservoir bypass line.

Preferably, in the gas delivery system of the first aspect or the method of operating the gas delivery system of the fourth aspect the storage tank is operated at a pressure of approximately 1 bara.

In the gas delivery system of the first aspect or the method of operating the gas delivery system of the fourth aspect the gas reservoir may be operated at pressures of 240 bara or more and/or of 300 bara of less.

In the gas delivery system of the first aspect or the method of operating the gas delivery system of the fourth aspect the evaporator may be operated at pressures of 1 bara of more and/or 900 bara or less.

In the gas delivery system of the first aspect or the method of operating the gas delivery system of the fourth aspect the pressure of gas delivered from the delivery line may by 5 bara or more and/or may be 60 bara or less, preferably 10 or 20 bara or less. Higher delivery pressures (e.g. up to 60 bara) may be typical for delivery to a turbine combustor, while lower delivery pressures (e.g. up to 10 or 20 bara) may be typical for delivery to a fuel cell.

### Summary of the Figures

Embodiments illustrating the principles of the invention will now be discussed with reference to the accompanying figures in which:
Figure 1 is a process flow diagram illustrating a gas delivery system.
Figure 2 is a process flow diagram illustrating a gas delivery system with modifications over the gas delivery system illustrated in Figure 1.
Figures 3A, 3B and 3C show different valve layouts that can provide a multi-outlet valve arrangement.
Figure 4 shows the valve positions corresponding to different operating conditions and process statuses of the gas delivery system illustrated in Figure 2.
Figure 5 shows an example of the pressures of pieces of process equipment under different operating conditions and during different process steps of operating the gas delivery system illustrated in Figure 2.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

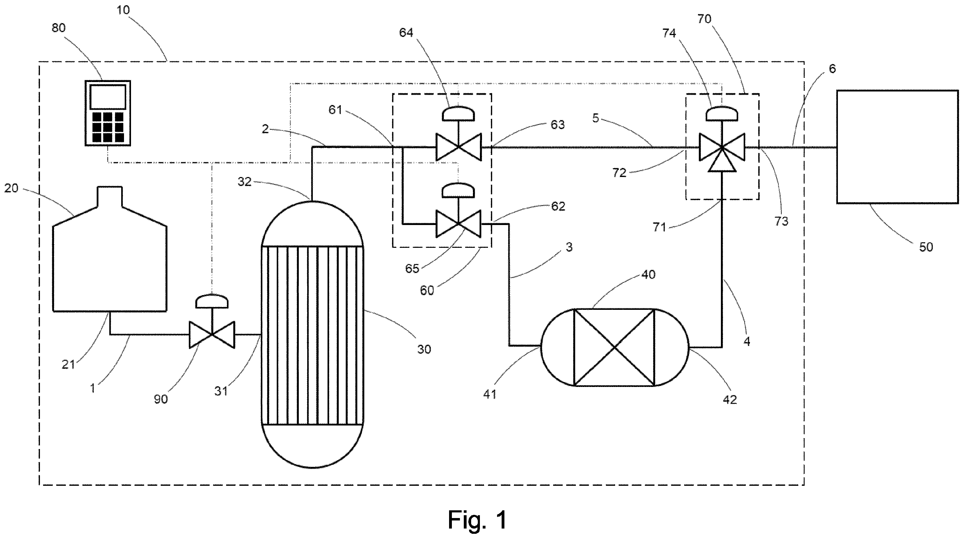

Figure 1 is a process flow diagram illustrating a gas delivery system 10 for delivering gas to an end use 50, such as a fuel cell or a gas turbine combustor. The gas delivery system 10 is primarily intended for use in delivering hydrogen gas, however it is also suitable for delivering other gases, for example, methane.

The gas for delivery by the gas delivery system 10 is stored as a cryogenic liquid in a cryogenic liquid storage tank 20. The storage tank 20 is typically a pressure vessel such that it can withstand a pressure difference between the inside of the storage tank 20 and the ambient pressure. The internal temperature of the storage tank 20 is set based on the liquid it is to contain and the internal pressure it is operated at. Typically, the internal pressure is approximately 1 bara, such that the storage tank 20 is not (substantially) pressurised when the ambient pressure is sea level atmospheric pressure.

The cryogenic liquid storage tank 20 is connected to an evaporator 30 via an evaporator feed line 1, enabling the evaporator 30 to be charged with liquid stored within the storage tank 20. An evaporator feed valve 90 belonging to a valve sub-system of the gas delivery system 10 is disposed on the evaporator feed line 1. This is one way in which the flow of liquid into the evaporator 30 can be controlled. The evaporator 30 is a pressure vessel, such that it is able to withstand the pressure generated when the liquid it is charged with is evaporated to produce a gas. The evaporator 30 is connected to a first valve inlet 61 of a multi-outlet valve arrangement 60 (which also belongs to the valve sub-system) by an evaporator dispensing line 2. Thus, gas generated in the evaporator 30 can feed into the first valve inlet 61 of the multi-outlet valve arrangement 60 via the evaporator dispensing line 2. One or more of ambient air, an electric heater and another process stream may be used as a heat source to provide the evaporator 30 with the heat energy required to evaporate liquid the evaporator 30 is charged with during use. Using ambient air as a heat source is reduces the complexity of the system and reduces or eliminates any energy input requirements from, e.g. a heater. However, such use does not provide much control over the evaporation by the evaporator 30. Using an electric heater as a heat source, on the other hand, improves the controllability of the system. Using a process fluid as a heat source can also improve controllability while reducing and/or eliminating any energy input requirement from a heater. Using a combination of any two or all three of these different heat sources can be beneficial in balancing controllability of the evaporator with reducing energy input requirements.

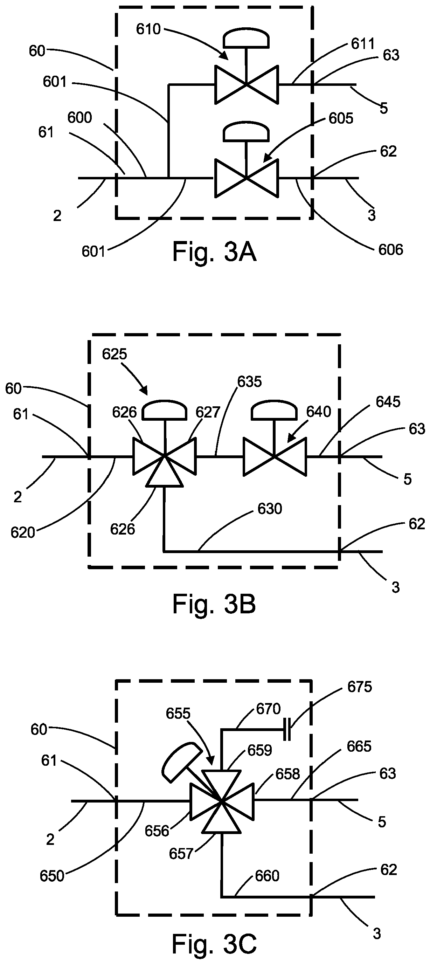

The multi-outlet valve arrangement 60 comprises the first valve inlet 61, as well as a first valve outlet 62 and a second valve outlet 63. Figure 1 provides an example valve layout for the multi-outlet valve arrangement 60, comprising two two-port valves 64, 65 configured to provide the first valve inlet 61, the first valve outlet 62 and the second valve outlet 63; however, multiple possible valve layouts exist. Further possible valve layouts for providing the multi-outlet valve arrangement 60 are described later in relation to Figure 3.

The multi-outlet valve arrangement 60 can be set in a first state in which the first valve outlet 62 is open and the second valve outlet 63 is closed, a second state in which both the first valve outlet 62 and the second valve outlet 63 are closed, or a third state in which the first valve outlet 62 is closed and the second valve outlet 63 is open. Thus, the flow of gas out of the multi-outlet valve arrangement 60 to the lines connected to the outlets 62, 63 of the multi-outlet valve arrangement 60 can be controlled.

A reservoir feed line 3 connects the first valve outlet 62 to a pressurisable gas reservoir 40. The gas reservoir 40 provides an intermediate storage container for gas generated in the evaporator 30 and awaiting delivery to the end use 50. As with the evaporator 30, the gas reservoir 40 is a pressure vessel, such that it can withstand the pressure generated inside it when it receives gas from the multi-outlet valve arrangement 60. Typically, the gas reservoir 40 has a larger volume than the evaporator 30 and is operated with a lower maximum pressure than the evaporator 30. The gas reservoir 40 is also connected to a reservoir dispensing line 4 that connects to a second valve inlet 71 of a multi-inlet valve arrangement 70 which also forms part of the valve sub-system. The multi-inlet valve arrangement 70 further comprises a third outlet 73 which connects to a delivery line 6 along which the gas delivery system 10 can deliver gas to an end use 50. Thus, gas stored within the gas reservoir 40 can be dispensed to the delivery line 6 via the reservoir dispensing line 4 and the multi-inlet valve arrangement 70 by appropriate operation of the multi-inlet valve arrangement 70.

The multi-inlet valve arrangement 70 has a third valve inlet 72, which is connected to the second valve outlet 63 of the multi-outlet valve arrangement 60 via a reservoir bypass line 5. Thus, the reservoir bypass line 5 provides a fluid path from the evaporator 30 to the delivery line 6 (the path extending through the multi-inlet valve arrangement 60, into the reservoir bypass line 5 and through multi-outlet valve arrangement 70) without passing through the gas reservoir 40. Figure 1 provides an example valve layout for the multi-inlet valve arrangement 70, comprising a three-port valve 74 configured to provide the second valve inlet 71, third valve inlet 72 and third valve outlet 73; however, the skilled person would recognise that multiple possible valve layouts exist.

As with the multi-outlet valve arrangement 60, the multi-inlet valve arrangement 70 can be set in multiple states. In particular, the multi-inlet valve arrangement 70 has a fourth state in which the second valve inlet 71 is open and the third valve inlet 72 is closed, and a fifth state in which the second valve inlet 71 is closed and the third valve inlet 72 is open.

By manipulation of the states of the multi-outlet valve arrangement 60 and the multi-inlet valve arrangement 70, the flow of gas along fluid paths in the system can be controlled.

The gas delivery system 10 further comprises a computer-based controller 80. The controller 80 is in control communication with each valve and valve arrangement forming the valve sub-system. For example, the controller 80 may have a wireless or wired electrical connection, a pneumatic connection, or a hydraulic connection to each valve or valve arrangement.

The controller 80 is configured to provide multiple operating conditions of the gas delivery system through control of the valve sub-system, including:
- a first operating condition in which the multi-outlet valve arrangement 60 is set in the first state and the multi-inlet valve arrangement 70 is set in the fourth state;
- a second operating condition in which the multi-outlet valve arrangement 60 is in the second state and the multi-inlet valve arrangement 70 is in the fourth state; and
- a third operating condition in which the multi-outlet valve arrangement 60 is in the third state and the multi-inlet valve arrangement 70 in the fifth state.

Under the first operating condition, the fluid path from the gas reservoir 40 to the delivery line 6 via the reservoir dispensing line 4 and the multi-inlet valve arrangement 70 is open and simultaneously the fluid path from the evaporator 30 to the gas reservoir 40 via the evaporator dispensing line 2, the multi-outlet valve arrangement 60 and the reservoir feed line 3 is open. Meanwhile, the fluid path from the evaporator 30 to the delivery line 6 via the multi-outlet valve arrangement 60, the reservoir bypass line 5 and the multi-inlet valve arrangement 70 is closed.

Under the second operating condition, the fluid path from the gas reservoir 40 to the delivery line 6 via the reservoir dispensing line 4 and the multi-inlet valve arrangement 70 is open. Meanwhile, the fluid path from the evaporator 30 to the gas reservoir 40 via the evaporator dispensing line 2, the multi-outlet valve arrangement 60 and the reservoir feed line 3 is closed, and the fluid path from the evaporator 30 to the delivery line 6 via the multi-outlet valve arrangement 60, the reservoir bypass line 5 and the multi-inlet valve arrangement is closed.

Under the third operating condition, the fluid path from the evaporator 30 to the delivery line 6 via the multi-outlet valve arrangement 60, the reservoir bypass line 5 and the multi-inlet valve arrangement 70 is open. Meanwhile, the fluid path from the evaporator 30 to the gas reservoir 40 via the evaporator dispensing line 2, the multi-outlet valve arrangement 60 and the reservoir feed line 3 is closed, and the fluid path from the gas reservoir 40 to the delivery line 6 via the reservoir dispensing line 4 and the multi-inlet valve arrangement 70 is closed.

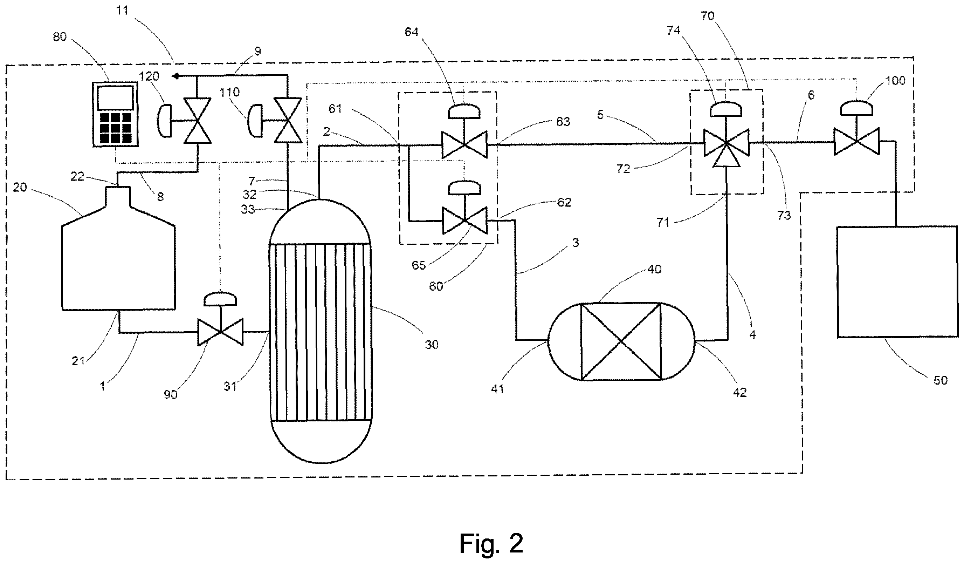

Next, a gas delivery system 11 with several optional modifications over the above-described gas delivery system 10 is described with reference to Figure 2.

The modified gas delivery system 11 further comprises a control valve 100 disposed on the delivery line 6. The control valve 100 forms part of the valve sub-system and is configured to be controlled by the controller 80. By varying if, and the extent to which, the control valve 100 is open, whereby the flowrate and/or pressure of gas from the multi-inlet valve arrangement 70 down the section of the delivery line 6 downstream of the control valve 100 is controllable. Control of the flowrate and/or pressure of the gas delivered by the gas delivery system 11 can help in matching the supply requirements of the end use 50.

Additionally, in the modified gas delivery system 11 illustrated in Figure 2, the evaporator 30 further comprises a vent outlet 33 and this vent outlet 33 is connected to a vent valve 110 via a vent line 7, the vent valve 110 forming part of the valve sub-system. Opening of the vent valve 110 can allow gas contained within the evaporator 30 to be vented via the vent outlet 33 and thus allow the pressure in the evaporator 30 to be reduced. It can be appreciated that use of the vent valve 110 to depressurise the evaporator 30 may be useful during both normal operation of the gas delivery system 11 and during abnormal operation of the gas delivery system 11 if overpressure of the evaporator 30, and/or the gas delivery system 11 as a whole, occurs. The use of the vent valve 110 to vent the evaporator 30 will be described in more detail when describing the operation of the gas delivery system 11.

A third optional feature present in the gas delivery system 11 illustrated in Figure 2 is a boil-off valve 120 connected to a boil-off outlet 22 on the storage tank 20 (the boil-off valve also forming part of the valve sub-system) by a boil-off line 8. Cryogenic storage tanks such as the storage tank 20 included in the present gas delivery system 11 are prone to boil-off, in which liquid stored within the storage tank 20 boils and generates vapour due to heat input into the storage tank 20 from the surroundings. Opening of the boil-off valve 120 allows vapour within the storage tank 20 generated by boil-off to be vented from the storage tank via the boil-off outlet 22 and boil-off line 8, thus relieving any excess pressure arising in the storage tank 20 from the generation of vapour.

Figure 2 also illustrates a waste line 9 leaving the vent valve 110 and the boil-off valve 120. If it is desired to recycle gas exiting the condenser 30 and/or the storage tank 20, the waste line 9 can be connected to a condenser sub-system (not illustrated in Figure 2) that is in turn connected to the storage tank via a recycle line (not illustrated in Figure 2). Thus, gas vented from the evaporator 30 and/or the storage tank 20 can be condensed and recycled to the storage tank as a liquid. Another option is for the waste line 9 to feed another end-use able to utilise low pressure gas provided intermittently.

As previously discussed, the multi-outlet valve arrangement 60 and the multi-inlet valve arrangement 70 may each be provided by a range of valve layouts. Figures 3A, 3B and 3C together illustrate three different valve layouts that each provide the multi-outlet valve arrangement 60.

In Figure 3A, the evaporator dispensing line 2 connects to the first valve inlet 61. An inlet line 600 splits into a first sub-line 601 and a second sub-line 602. The first sub-line 601 connects to a first two-port valve 605 and the second sub-line 602 connects to a second two-port valve 610. The first two-port valve 605 connects to a first outlet line 606 leading to the first valve outlet 62 that then connects to the reservoir feed line 3. The second two-port valve 610 connects to a second outlet line 611 leading to the second valve outlet 63 that then connects to the reservoir bypass line 5.

The first state of the multi-outlet valve arrangement 60 may be provided by having the first two-port valve 605 open and the second two-port valve 610 closed. Thus, gas flowing into the multi-outlet valve arrangement 60 from the evaporator dispensing line 2 via the first valve inlet 61 flows through the second two-port valve 610 and out of the multi-outlet valve arrangement 60 to the reservoir bypass line 5 via the second valve outlet 63.

The second state of the multi-outlet valve arrangement 60 may be provided by having both the first two-port valve 605 and the second two-port valve 610 closed. Thus, gas flowing into the multi-outlet valve arrangement 60 from the evaporator dispensing line 2 via the first valve inlet 61 does not flow through the first two-port valve 605, nor the second two-port valve 610.

The third state of the multi-outlet valve arrangement 60 may be provided by having the first two-port valve 605 closed and the second two-port valve 610 open. Thus, gas flowing into the multi-outlet valve arrangement 60 from the evaporator dispensing line 2 via the first valve inlet 61 flows through the first two-port valve 605 and out of the multi-outlet valve arrangement 60 to the reservoir feed line 3 via the first valve outlet 62.

In Figure 3B, the evaporator dispensing line 2 connects to the first valve inlet 61. An inlet line 620 connects to a first port 626 of a three-port valve 625. A second port 627 of the three-port valve 625 connects to a first outlet line 630 leading to the first valve outlet 62 that then connects to the reservoir feed line 3. A third port 628 of the three-port valve 625 connects to an intermediate line 635 that then connects to a first two-port valve 640. The first two-port valve 640 connects to a second outlet line 645 leading to the second valve outlet 63 that then connects to the reservoir bypass line 5.

The first state of the multi-outlet valve arrangement 60 may be provided by setting the three-port valve 625 such that fluid entering the first port 626 exits the three-port valve 625 via the second port 627 and not the third port 628. Thus, gas flowing into the multi-outlet valve arrangement 60 from the evaporator dispensing line 2 via the first valve inlet 61 flows through the three-port valve 625 and the two-port valve 640 and then out of the multi-outlet valve arrangement 60 to the reservoir bypass line 5 via the second valve outlet 63.

The second state of the multi-outlet valve arrangement 60 may be provided by setting the three-port valve 625 such that fluid entering the first port 626 exits the three-port valve 625 via the third port 628 and not the second port 627 and having the first two-port valve 640 closed. Thus, gas flowing into the multi-outlet valve arrangement 60 from the evaporator dispensing line 2 via the first valve inlet 61 flows through the three-port valve 625 into the intermediate line 635 but does not flow through the two-port valve 640.

The third state of the multi-outlet valve arrangement 60 may be provided by setting the three-port valve 625 such that fluid entering the first port 626 exits the three-port valve 625 via the third port 628 and not the second port 627 and having the first two-port valve 640 open. Thus, gas flowing into the multi-outlet valve arrangement 60 from the evaporator dispensing line 2 via the first valve inlet 61 flows through the three-port valve 625 and out of the multi-outlet valve arrangement 60 to the reservoir feed line 3 via the first valve outlet 62.

In Figure 3C, the evaporator dispensing line connects to the first valve inlet 61. An inlet line 650 connects to a first port 656 of a four-port valve 655. A second port 657 of the four-port valve 655 connects to a first outlet line 660 leading to the first valve outlet 62 that then connects to the reservoir feed line 3. A third port 658 of the four-port valve 655 connects to a second outlet line 665 leading to the second valve outlet 63 that then connects to the reservoir bypass line 5. A fourth port 659 of the four-port valve 655 connects to a third outlet line 670 that is blanked off, for example, by a blanking plate 675.

The first state of the multi-outlet valve arrangement 60 may be provided by setting the four-port valve 655 such that fluid entering the first port 656 exits the four-port valve 655 via the second port 657 and not via the third port 658 or the fourth port 659. Thus, gas flowing into the multi-outlet valve arrangement 60 from the evaporator dispensing line 2 via the first valve inlet 61 flows through the four-port valve 655 and the and out of the multi-outlet valve arrangement 60 to the reservoir bypass line 5 via the second valve outlet 63.

The second state of the multi-outlet valve arrangement 60 may be provided by setting the four-port valve 655 such that fluid entering the first port 656 exits the four-port valve 655 via the fourth port 659 and not via the second port 657 or the third port 658. Thus, gas flowing into the multi-outlet valve arrangement 60 from the evaporator dispensing line 2 via the first valve inlet 61 flows through the four-port valve 655 into the third outlet line 670 where the flow is then blocked by the blanking plate 675.

The third state of the multi-outlet valve arrangement 60 may be provided by setting the four-port valve 655 such that fluid entering the first port 656 exits the four-port valve 655 via the third port 658 and not via the second port 657 or the fourth port 659. Thus, gas flowing into the multi-outlet valve arrangement 60 from the evaporator dispensing line 2 via the first valve inlet 61 flows through the four-port valve 655 and out of the multi-outlet valve arrangement 60 to the reservoir feed line 3 via the first valve outlet 62.

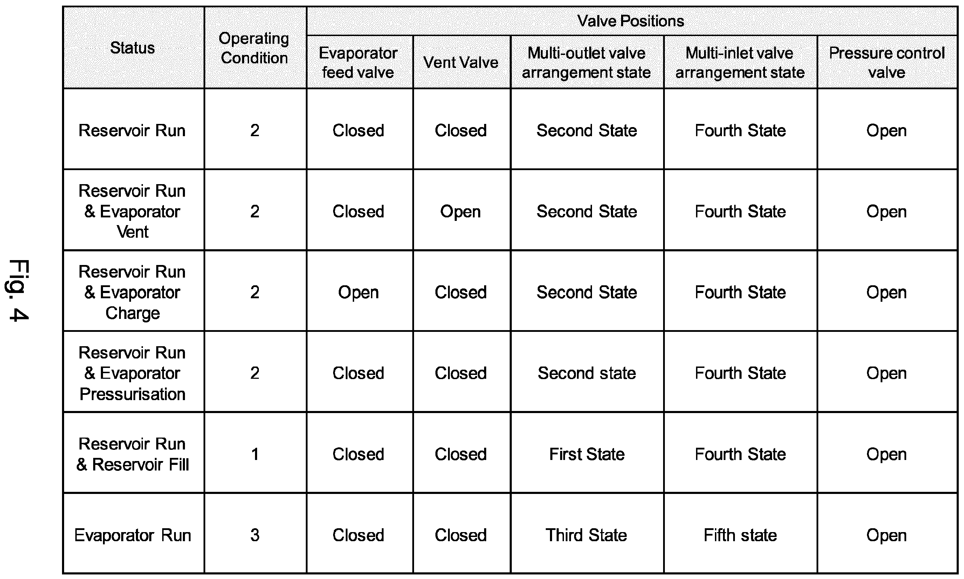

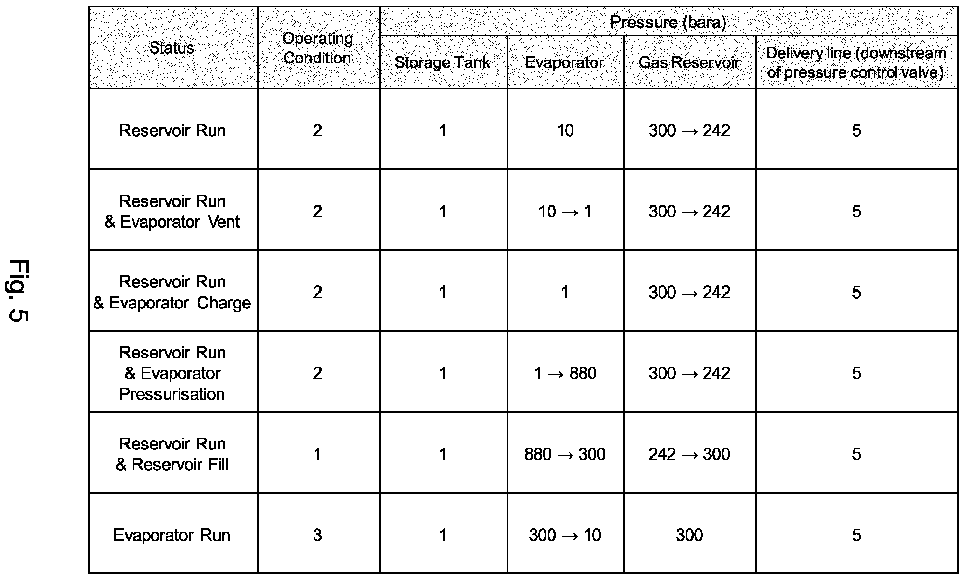

Next, a method of operating the gas delivery systems 10, 11 illustrated in Figures 1 and 2 will be described in relation to the tables provided in Figures 4 and 5, starting from a state ("starting state") in which the gas reservoir 40 contains pressurised gas.

Firstly, the controller 80 implements the second operating condition of the gas delivery system 10, 11 by setting the multi-outlet valve arrangement 60 to the second state and the multi-inlet valve arrangement 70 to the fifth state. Under the second operating condition, a reservoir run according to the first row of the table in Figure 4 is performed: pressurised gas stored within the gas reservoir 40 flows out of the gas reservoir 40 into the reservoir dispensing line 4, then into the multi-inlet valve arrangement 70 via the second valve inlet 71, then out of the multi-inlet valve arrangement 70 via the third valve outlet 73 and into the delivery line 6 connected to the end use 50.

If a control valve 100 is disposed on the delivery line 6, the controller 80 may also be configured to vary the degree of opening of the control valve 100 whilst the system 10, 11 is under the second operating condition to control the pressure and/or flowrate of the gas flowing down the delivery line 6 downstream of the control valve 100.

As illustrated by the first row of the table in Figure 5, during the reservoir run, the pressure in the gas reservoir 40 will fall as gas flows out of the gas reservoir 40 to the delivery line 6. Whilst the gas delivery system is under the second operating condition and delivering gas from the gas reservoir 40 to the end use 50, the controller implements an evaporator pressurising protocol:
- In the case that the evaporator 30 comprises a vent outlet 33 connected to a vent valve 110 via a vent line 7, the evaporator pressurising protocol may first comprise an evaporator vent stage. The contents of the evaporator 30 are vented through the vent outlet 33 by opening and then closing the vent valve 110. This evaporator venting stage is represented by row 2 of the tables in Figures 4 and 5. The evaporator venting stage may allow the evaporator 30 to be de-pressurised. For example, row 2 of the table in Figure 5 shows the pressure of the evaporator 30 falling from 10 bara to 1 bara.
- In an evaporator charge stage, liquid from the storage tank 20 is delivered to the evaporator 30 via the evaporator feed line 1. In the case that the gas delivery system 10, 11 comprises an evaporator feed valve 90 disposed on the evaporator feed line 1, the controller 80 may also be configured to open, and vary the degree of opening of, the evaporator feed valve 90 to control the flow of liquid into the evaporator 30 from the storage tank 20.
- Having charged the evaporator 30 with liquid at the evaporator charge stage, the liquid contained within the evaporator 30 is evaporated in an evaporator pressurisation stage corresponding to the third row of the tables in Figures 4 and 5. Typically, the evaporator feed line 1 is closed prior to evaporation so that the vapour generated in the evaporator 30 is not transferred back down the evaporator feed line 1 into the storage tank 20, which would lead to the storage tank 20, as well as the evaporator 30, being pressurised. For example, in the case that an evaporator feed valve 90 is disposed on the evaporator feed line 1, the controller 80 may close the evaporator feed valve 90 for the evaporator pressurisation stage of the evaporator pressurising protocol. The skilled person is aware of numerous ways in which the evaporator 30 may be isolated from the storage tank 20. During the evaporator pressurisation stage, the pressure inside the evaporator 30 rises, typically to above the minimum pressure that the gas reservoir 40 reaches during the reservoir run; for example in the third row of the table in Figure 5, the evaporator pressure rises to 880 bara, which is above the minimum pressure of the gas reservoir 40 during the reservoir run (242 bara).

Following the evaporator pressurising protocol, the controller 80 implements the first operating condition of the gas delivery system 10, 11 by setting the multi-outlet valve arrangement 60 to the first state and the multi-inlet valve arrangement 70 to the fourth state. Under the first operating condition, the reservoir run being performed under the second operating condition continues, but simultaneously a reservoir fill is performed. This reservoir run and reservoir fill combination corresponds to the fifth row of the tables in Figure 4 and 5: pressurised gas stored within the evaporator 30 flows out of the evaporator 30, into the evaporator dispensing line 2, into the multi-outlet valve arrangement 60 via the first valve inlet 61, out of the multi-outlet valve arrangement 50 via the first valve outlet 62, into the reservoir feed line 3 and into the gas reservoir 40.

By the flow rate of gas from the evaporator 30 to the gas reservoir 40 exceeding the flow rate of gas from the gas reservoir 40 to the delivery line 6, the gas reservoir 40 can be re-pressurised whilst still delivering gas to the delivery line 6. For example, in the fifth row of the table in Figure 5, the pressure of the evaporator 30 falls from 880 bara to 300 bara and the pressure of the gas reservoir rises from 242 bara to 300 bara. It can be appreciated that it is convenient for the pressure of the evaporator 30 at the end of the evaporator pressurising protocol to exceed the minimum pressure of the gas reservoir 40 during the reservoir run, such that gas contained in the evaporator 30 can be delivered to the gas reservoir 40 during the reservoir fill without the need for intermediate compression. More conveniently, the pressure of the evaporator 30 at the end of the evaporator pressurising protocol exceeds the maximum pressure of the gas reservoir 40 during the reservoir run, such that the gas reservoir 40 can be re-pressurised to the pressure required to start a reservoir run (e.g. 300 bara in the example given in Figure 5) using the evaporator 30 and without the need for intermediate compression.

If a control valve 100 is disposed on the delivery line 6, the controller 80 may also be configured to vary the degree of opening of the control valve 100 whilst the system 11 is under the first operating condition to control the pressure and/or flowrate of the gas flowing down the delivery line 6 downstream of the control valve 100.

Having carried out a reservoir fill to fill the gas reservoir 40, the controller 80 implements the third operating condition of the gas delivery system 10, 11 by setting the multi-outlet valve arrangement 60 to the third state and the multi-inlet valve arrangement 70 to the fifth state. Under the third operating condition, the reservoir run being performed under the second and first operating conditions is stopped and an evaporator run according to the sixth row of the tables in Figures 4 and 5 is started: the pressurised gas remaining in the evaporator 30 after the reservoir fill flows out of the evaporator 30, into the evaporator dispensing line 2, into the multi-outlet valve arrangement 60 via the first valve inlet 61, out of the multi-outlet valve arrangement 60 via the second valve outlet 63, into the reservoir bypass line 5, into the multi-inlet valve arrangement 70 via the second valve inlet 71, out of the multi-inlet valve arrangement 70 via the third valve outlet 73 and into the delivery line 6 connected to the end use 50.

If a control valve 100 is disposed on the delivery line 6, the controller 80 may also be configured to vary the degree of opening of the control valve 100 whilst the system 10, 11 is under the third operating condition to control the pressure and/or flowrate of the gas flowing down the delivery line 6 downstream of the control valve 100.

Although the gas reservoir 40 is filled and ready to commence a reservoir run after the reservoir fill is completed (the fifth row of the tables in Figures 4 and 5), it is preferable to carry out an evaporator run (the sixth row of the tables in Figures 4 and 5) prior to commencing another reservoir run (rows 1-5 of the tables in Figures 4 and 5) so that the pressurised gas remaining in the evaporator 30 at the end of the evaporator fill can be provided to the end use 50. As the example in the sixth row of the table in Figure 5 illustrates, the evaporator 30 may commence the evaporator run at the same pressure as the filled gas reservoir 40 (300 bara); during the evaporator run, the pressure in the evaporator 30 falls (to 10 bara) as gas is delivered from the evaporator to the end use 50 via the delivery line 6. In the case of a gas delivery system 111 comprising a control valve 100 disposed on the delivery line 6, the pressure of gas delivered to the end use 50 during the evaporator run can be maintained at the same pressure as the pressure of gas delivered throughout the reservoir run (for example, 5 bara). Whilst the pressure of the evaporator 30 remains above a target pressure for the delivery line 6 (for example, 5 bara), no intermediate compression may be required to maintain the delivery line pressure at the target pressure.

Advantageously, in the case that the evaporator 30 comprises a vent outlet 33 connected to a vent valve 110 via a vent line 7, the evaporator run can be terminated prior to the pressure of the evaporator 30 falling below the target pressure for the delivery line 6, as the remaining excess pressure of the evaporator 30 over the storage tank 20 can be relieved by venting the evaporator 30 (row 2 of the tables in Figures 4 and 5) prior to the evaporator charge step of the evaporator pressurising protocol (row 3 of the tables in Figures 4 and 5). In the case that the evaporator 30 does not comprise a vent outlet 33, the evaporator run can be continued past the point that the pressure of the evaporator 30 falls below the target pressure for the delivery line 6, and until the pressure of the evaporator 30 is approximately equal to that of the storage tank 20.

Following the evaporator run, the system 10, 11 is returned to the starting state, i.e. with the gas reservoir 40 containing pressurised gas. Accordingly, the controller 80 may implement the second operating condition of the gas delivery system 10, 11 to start another reservoir run, and the above-described method can be repeated.

As can be appreciated from the method described above, the present gas delivery system 10, 11 can deliver gas stored as a cryogenic liquid to an end use 50 in a continuous fashion. That is, gas can be delivered to the end use 50 without interruption, even though evaporation of the cryogenic liquid to produce that gas is conducted in a batchwise manner in the evaporator 30. The gas delivery system 10, 11 can continue to provide gas to the end use 50 until the storage tank 20 contains no more cryogenic liquid.
***

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A gas delivery system (10, 11) comprising:
a cryogenic liquid storage tank (20);
an evaporator (30);
a pressurisable gas reservoir (40);
a valve sub-system including: a multi-outlet valve arrangement (60) having a first valve inlet (61), a first valve outlet (62) and a second valve outlet (63); and a multi-inlet valve arrangement (70) having a second valve inlet (71), a third valve inlet (72) and a third valve outlet (73);
a delivery line (6) connected to the third valve outlet (73);
an evaporator feed line (1) connecting the storage tank (20) and the evaporator (30);
an evaporator dispensing line (2) connecting the evaporator (30) and the first valve inlet (61);
a reservoir feed line (3) connecting the first valve outlet (62) and the reservoir (40);
a reservoir dispensing line (4) connecting the reservoir (40) and the second valve inlet (71); and
a reservoir bypass line (5) connecting the second valve outlet (63) and the third valve inlet (72);
wherein the multi-outlet valve arrangement (60) has:
a first state in which the first valve outlet (62) is open, and the second valve outlet (63) is closed; a second state in which the first valve outlet (62) and the second valve outlet (63) are closed; and
a third state in which the first valve outlet (62) is closed, and the second valve outlet (63) is open;
wherein the multi-inlet valve arrangement (70) has:
a fourth state in which the second valve inlet (71) is open, and the third valve inlet (72) is closed; and
a fifth state in which the second valve inlet (71) is closed, and the third valve inlet (72) is open; and
wherein the gas delivery system (10) further comprises a computer-based controller (80) configured to control the valve sub-system to provide:
a first operating condition of the gas delivery system (10, 11) in which the multi-outlet valve arrangement (60) is in the first state and the multi-inlet valve arrangement (70) is in the fourth state, the gas reservoir (40) delivers gas to the delivery line (6) via the reservoir dispensing line (4), and the gas reservoir (40) is concurrently pressurised by gas fed from the evaporator (30) via the reservoir feed line (3), the reservoir bypass line (5) being closed;
a second operating condition of the gas delivery system (10, 11) in which the multi-outlet valve arrangement (60) is in the second state and the multi-inlet valve arrangement (70) is in the fourth state, the gas reservoir (40) delivers gas to the delivery line (6) via the reservoir dispensing line (4), the reservoir feed line (3) and the reservoir bypass line (5) being closed; and
a third operating condition of the gas delivery system (10, 11) in which the multi-outlet valve arrangement (60) is in the third state and the multi-inlet valve arrangement (70) is in the fifth state, the evaporator (30) delivers gas to the delivery line (6) via the reservoir bypass line (5), the reservoir feed line (3) and the reservoir dispensing line (4) being closed.

2. The gas delivery system (10, 11) according to claim 1, wherein the system (10, 11) is a hydrogen gas delivery system.

3. The gas delivery system (10, 11) according to any preceding claim, wherein the valve sub-system further includes a pressure control valve (100) disposed on the delivery line (6) to control a pressure of gas delivered therethrough.

4. The gas delivery system (10, 11) according to any preceding claim, wherein the valve sub-system further includes an evaporator feed valve (90) disposed on the evaporator feed line (1) to control gas flow through the evaporator feed line (1) from the storage tank (20) to the evaporator (30).

5. The gas delivery system (10, 11) according to claim 4, wherein in the first and third operating conditions of the gas delivery system (10, 11) the evaporator feed valve (90) is closed.

6. The gas delivery system (10, 11) according to claim 4 or 5, wherein in the second operating condition of the gas delivery system (10, 11) the evaporator feed valve (90) is: openable to charge the evaporator (30) with liquid from the storage tank (20) via the evaporator feed line (1), and then closed to evaporate the charged liquid in the evaporator (30).

7. The gas delivery system (10, 11) according to any preceding claim, wherein the evaporator (30) has a vent outlet (33), and wherein the valve sub-system further includes a vent valve (110) to control gas flow through the vent outlet (33) from the evaporator (30).

8. The gas delivery system (10, 11) according to claim 7, wherein in the second operating condition of the gas delivery system (10, 11) the vent valve (110) is openable to vent the evaporator (30).

9. The gas delivery system (10, 11) according to claim 7 or 8 as dependent on claim 4, wherein the vent valve (110) is only openable when the evaporator feed valve (90) is closed.

10. The gas delivery system (10, 11) according to any preceding claim, wherein the multi-outlet valve arrangement (60) comprises any of (i) a four-port valve (655), (ii) a three-port valve (625) and a two-port valve (640), and (iii) two two-port valves (605, 610).

11. The gas delivery system (10, 11) according to any preceding claim, wherein the evaporator (30) uses one or more of: ambient air; an electric heater; and a process fluid as a heat source.

12. A fuel cell system comprising the gas delivery system (10, 11) according to any preceding claim and a fuel cell, wherein the gas delivery system (10, 11) is configured to deliver fuel gas to the fuel cell.

13. A gas turbine combustor system comprising the gas delivery system (10, 11) according to any of claims 1 to 11 and a gas turbine combustor, wherein the gas delivery system (10, 11) is configured to deliver fuel gas to the gas turbine combustor.

14. A method of operating the gas delivery system (10, 11) according to any of claims 1 to 11, the method comprising implementing in any order:
the first operating condition of the gas delivery system (10, 11) to deliver gas from the gas reservoir (40) to the delivery line (6) via the reservoir dispensing line (4) and concurrently pressurising the gas reservoir (40) with gas from the evaporator (30) via the reservoir feed line (3);
the second operating condition of the gas delivery system (10, 11) to deliver gas from the gas reservoir (40) to the delivery line (6) via the reservoir dispensing line (4); and
the third operating condition of the gas delivery system (10, 11) to feed gas to the delivery line (6) from the evaporator (30) via the reservoir bypass line (5).
